# EUROPEAN PATENT SPECIFICATION

(11) **EP 2 581 160 B1**
(45) Date of publication and mention of the grant of the patent: **01.01.2014**
(21) Application number: 12185293.3
(22) Date of filing: 20.09.2012
(51) Int. Cl.: B23C 9/00, B25B 11/00, B23Q 3/08, B21D 25/02, B21D 37/16, B21D 53/92, B21D 11/02, B21D 53/78

(54) **Method of manufacturing a structure with a high performance metal alloy**
Verfahren zur Herstellung einer Struktur mit einer Hochleistungsmetalllegierung
Procédé de fabrication d'une structure avec un alliage de métal hautes performances

(30) Priority: 14.10.2011 US 201161547156 P; 28.08.2012 US 201213596454
(43) Date of publication of application: 17.04.2013
(60) Divisional application: 13192941.6
(73) Proprietor: Bell Helicopter Textron Inc., Fort Worth, TX 76101 (US)
(72) Inventor: Bishop, Stephen K, Dallas, TX Texas 75231 (US); Swenson, Stephen S, Weatherford, TX Texas 76087 (US); Wilson, Crystal L, Haslet, TX Texas 76052 (US); Lemond, Paulette D, Rowlett, TX Texas 75089 (US)
(74) Representative: Lawrence, John

(56) References cited:
- CN-U- 201 455 699
- JP-A- 2011 020 203
- KR-B1- 100 827 795
- US-A- 2 905 225
- US-A- 2 952 294
- US-A- 2 952 767
- US-A- 3 021 887
- US-A- 5 035 133
- US-A1- 2007 261 463
- US-B1- 6 764 258

## Description

### BACKGROUND

### Technical Field:

The present application relates to a method of manufacturing a structure. The method of the present application is particularly useful for manufacturing an aerodynamic structure for a rotor blade of an aircraft. Further, the method is particularly well suited for manufacturing with a high performance metal alloy, such as titanium.

### Description of Related Art:

In general, certain aircraft structures may require a high level of precision, as well as a plurality of complex manufacturing steps configured to achieve the requisite high level of precision. For example, it is well known that chemical milling is a manufacturing process commonly used to manufacture parts having complex contours and tapered surfaces. However, chemically milling has shortcomings, such as surfaces pitting, tolerance variation, labor intensive masking, material limitations, and toxic material risks, to name a few.

Further, it can be particularly desirable to use high performance metal alloys, such a titanium alloy, in aircraft structures due their high strength to weight ratios, and other qualities. However, the machining and forming of high performance metal alloys has proven particularly challenging.

Hence, there is a need for an improved manufacturing method that improves structure quality and accuracy, while also decreasing labor hours and part rework. Further, there is a need for a method of machining and forming a high performance metal alloy, such as titanium.

US patent 6,764,257 describes a positionable vacuum clamp system including a vacuum table and one or more positionable vacuum clamps which can be of various shapes to accommodate differently shaped workpieces.

US patent 3,021,887 describes a method of bending a long thin sheet of titanium to the shape of a curved die face which comprises the steps of resistance brazing the inner ends of thin short stainless steel sheets to the opposite ends of said sheets by interposing strips of brazing alloy in face adjacency respectively between said titanium sheet and each of said stainless steel sheets, pressing each of said strips between the titanium sheet and the stainless steel sheet adjacent thereto and concurrently passing electrical current therethrough and progressively along a line across said sheets with intensity and limited duration sufficient to heat each of said strips along said line to brazing temperature at the melting temperature of said alloy; heating said die face to a temperature within the range of 400° to 800° F.; placing the center portion of said long sheet against the center of said die face; and pulling the outer ends of said short sheets to stretch said long sheet beyond its elastic limit and along said die face to conform said long sheet to said die face.

### Description of the Drawings

The novel features believed characteristic of the method of the present application are set forth in the appended claims. However, the method itself and further objectives and advantages thereof, will best be understood by reference to the following detailed description when read in conjunction with the accompanying drawings, wherein:
**Figure 1** is a perspective view of an aircraft, according to an illustrative embodiment of the present application;
**Figure 2** is a cross-sectional view of a rotor blade, taken at section lines II-II in Figure 1, according to the illustrative embodiment of the present application;
**Figure 3** is a schematic view of a method of manufacturing, according to the illustrative embodiment of the present application;
**Figure 4** is a perspective view of a metal sheet, according to an illustrative embodiment of the present application;
**Figure 5** is a top view of a machined metal sheet, according to an illustrative embodiment of the present application;
**Figure 6** is a cross-sectional view of the machined metal sheet, taken at section lines VI-VI in Figure 5, according to the illustrative embodiment of the present application;
**Figure 7** is a cross-sectional view of a finished abrasion strip member, according to an illustrative embodiment of the present application;
**Figure 8** is a schematic block diagram of a system, according to an illustrative embodiment of the present application;
**Figure 9** is a schematic view of a method of machining a high performance metal alloy, according to the illustrative embodiment of the present application;
**Figure 10** is a top view of a vacuum fixture used in the method of machining a high performance metal alloy;
**Figure 11** is a perspective view of a heated mandrel for stretch forming a high performance metal alloy, according to an illustrative embodiment of the present application; and
**Figure 12** is a perspective view of a heated mandrel for stretch forming a high performance metal alloy, according to another illustrative embodiment of the present application.

### Description of the Preferred Embodiment

Illustrative embodiments of the method are described below. In the interest of clarity, all features of an actual implementation may not be described in this specification. It will of course be appreciated that in the development of any such actual embodiment, numerous implementation-specific decisions must be made to achieve the developer's specific goals, such as compliance with system-related and business-related constraints, which will vary from one implementation to another.

Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, *etc*. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The present application includes a method for efficiently manufacturing structures having a complex surfaces and precision located features. For example, the method of the present application is particularly well suited for manufacturing a leading edge abrasion strip member of a rotor blade, the abrasion strip member having an exterior airfoil surface and an interior portion, each having precision located features. However, it should be fully appreciated that the method may be used to manufacture any variety of structures; for example, wing members, nose cones, tip-caps, and tail rotor blades, are examples of other structures that may be manufactured using the method and system of the present application.

Further, the method of the present application is particularly well suited for machining and forming a thin sheet of a high performance metal alloy, such as titanium. However, it should be appreciated that the method of the present application may also be used for machining and forming a thin metal of other materials, such as stainless steel, for example.

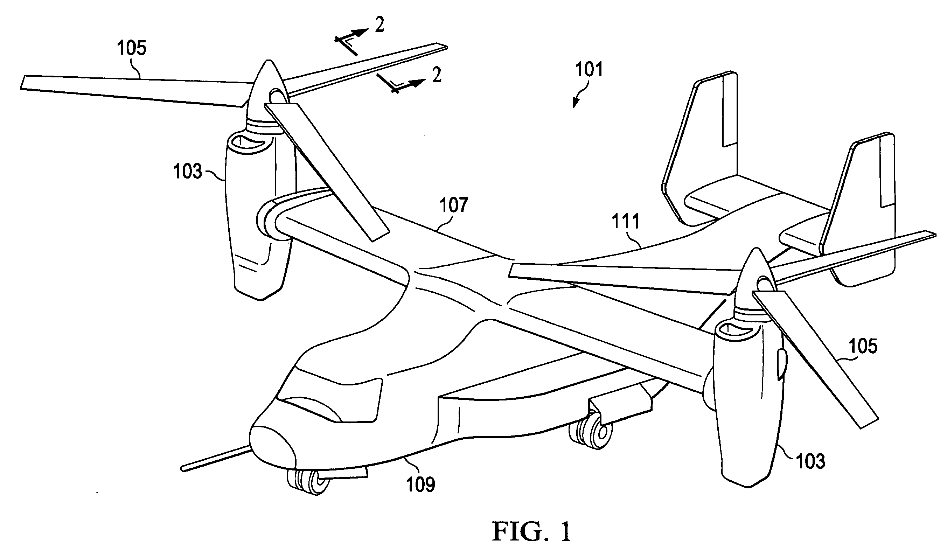

Referring to Figure 1, an aircraft 101 is illustrated. Aircraft 101 is a tilt-rotor aircraft having a nacelle 103 on each of end of a wing 107. Each nacelle 103 includes a rotor hub with a plurality of rotor blades 105. Aircraft 101 further includes a fuselage 109 and a tail member 111. Aircraft 101 is illustrated as a tilt-rotor aircraft for exemplary purposes only. It should be appreciated that the method of the present application may be used to manufacture structures on aircraft other than a tilt-rotor aircraft. Further, the method of the present application may be used to manufacture structures on non-aircraft vehicles and implementations.

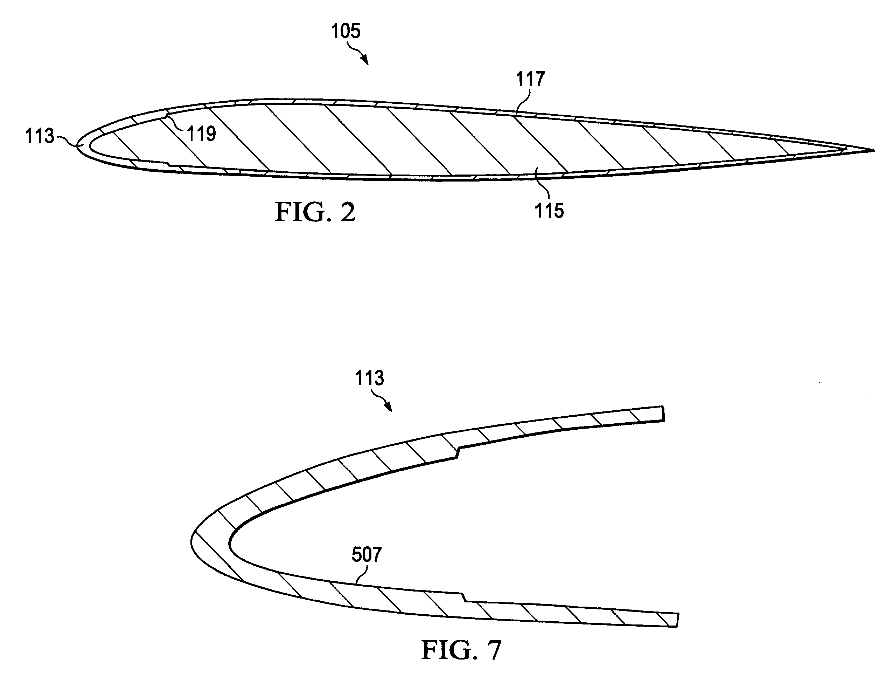

Referring now also to Figure 2, each rotor blade 105 includes an abrasion strip member 113 located on a leading edge portion of rotor blade 105. Rotor blade 105 further includes a body portion 115 and a skin member 117. As known in the art, body portion 115 can include any variety of structures, such as a spar, a composite core, a rib, to name a few. In the exemplary embodiment, abrasion strip member 113 includes dimensions that are critical to the structural integrity and performance of rotor blade 105. For example, the exterior airfoil shape and contour of abrasion strip member 113 is critical to the performance of rotor blade 105. Further, the inner shape and dimensions of abrasion strip member 113 can be critical for mating with body portion 115. For example, a location of a lip portion 119 can be critical for the proper structural mating with a spar in body portion 115.

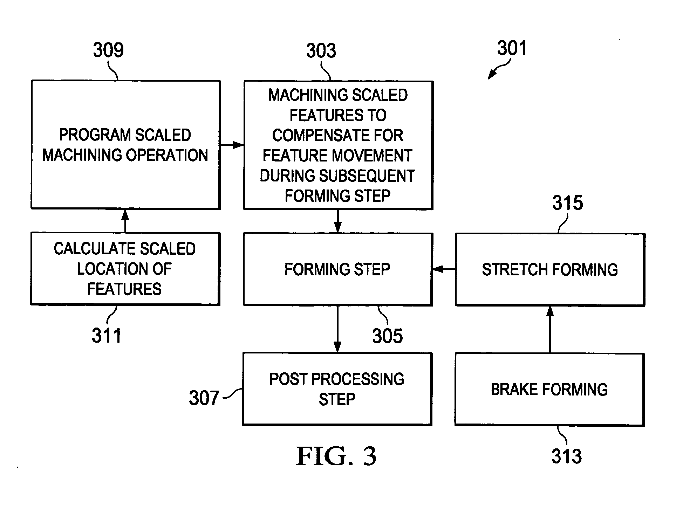

Referring now to Figure 3, a method 301 of manufacturing a part is schematically illustrated. For illustrative purposes, method 301 is illustrated with regard to manufacturing abrasion strip member 105. Method 301 includes a step 303 which involves machining scaled features with a size and location that compensates for feature movement during a subsequent forming step. Method 301 further includes a forming step 305 and a post processing step 307.

Step 303 includes a step 311 for calculating the scaled location of the machined features. In step 305, the part is formed through in a stretch forming and/or brake forming procedure that deforms and moves features of the part. As such, step 311 involves calculating the scaled size and location of the features so that the features will be in the proper location subsequent forming step 305. In the preferred embodiment, step 311 is performed by first machining the features in the part, then brake forming and stretch forming the part, then measuring the dimension dislocation and distortion of the machined features. Data pertaining to the measured dimension dislocation and distortion of the machined features is statistically evaluated to confirm relative uniformity of feature movement within context of allowable tolerances for both measurement capability and final part assembly. In an alternative embodiment, the calculation of the scaled size and location of the machined features is performed analytically, such that the scaled size and location of the machined features is determined by analytically predicting the dislocation and distortion of the machined features in the forming step 305.

Step 309 includes programming the machining tool with the data developed in step 311. It is well known in the art that machining tools, such as a CNC machining tool, are typically programmable with a set of instructions for machining the part. As such, step 309 includes programming the machining tool to machine the desired part features in accordance with the scaled feature size and location determined in step 311.

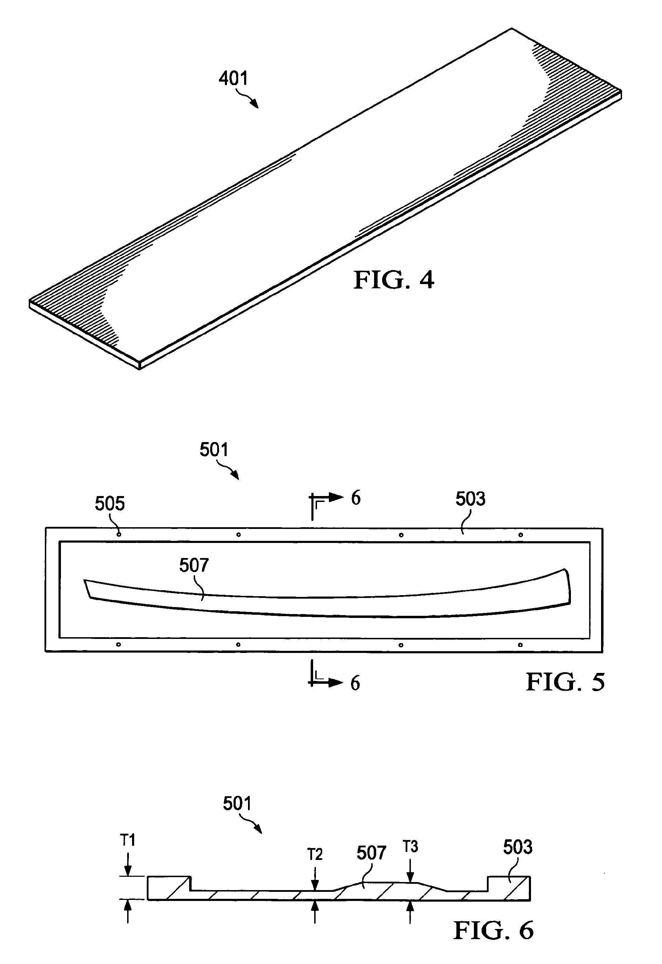

Referring now also to Figures 4-6, the machining of abrasion strip member 113 is illustrated. A blank sheet 401 is illustrated in Figure 4. The size and material of sheet 401 is implementation specific. However, method 301 is particularly well suited for using a high performance alloy, such as titanium. In such an embodiment, sheet 401 can be titanium (Ti 6-A1 4-V alloy) that is approximately 1.8 mm (0.70 inches) thick, 16 inches wide, and 192 inches long. However, it should be fully appreciated that other materials and sizes of sheet 401 may be used.

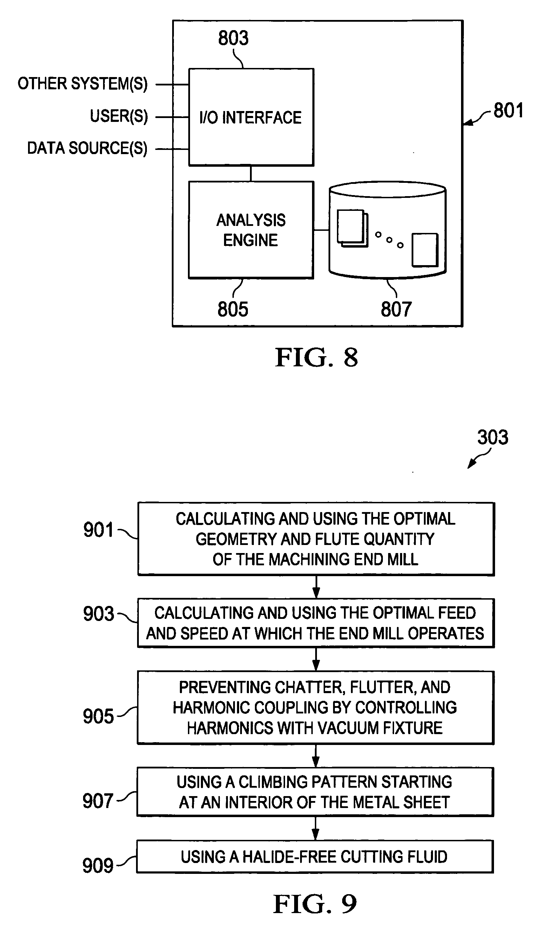

The preferred embodiment of step 303 is particularly well suited for the machining of a high performance alloy, such as a titanium alloy sheet. Referring briefly to Figure 9, it is preferred that steps 901 through 909 are used when step 303 involves machining a high performance alloy, such as a titanium alloy sheet. It should be appreciated that steps 901 through 909 may also be employed when machining sheet metal of other material compositions. Titanium sheet is typically difficult to machine with the accuracy to the make it practical for production aerospace applications. More specifically, historically it is been difficult to machine the desired dimensional surface and feature geometry in thin flat titanium sheet. Steps 901 through 909 can be used to achieve high yield, low cost, accurate, and reproducible machined thin sheet titanium. Still referring to Figure 9, step 901 includes calculating and using the optimal geometry and flute quantity of the machining end mill. An end mill having too few flutes is slow and results in a rough finish. An end mill having too many flutes can't throw out the metal chips fast enough. In the preferred embodiment, the end mill geometry and flute quantity is optimized. An exemplary end mill is marketed by M.A. Ford, which is a 5-flute end mill with a 2.29 mm (90 mil (thousandths of an inch) radius, each flute being approximately 19mm x 19mm x 38mm (0.75 inch x 0.75 inch x 1.5 inch). Step 903 includes calculating and using the optimal feed and speed at which the end mill operates. In an exemplary embodiment, the end mill operates at approximately 915 rpm (revolutions per minute), 9.5mm per second (22.5 ipm) (inches per minute), and a chip load of 0.12mm (4.9 mils). It should be appreciated that the end mill size, as well as the speed and feed at which the end mill is operated, is implementation specific. Steps 901 and 903 are not mutually exclusive, as such, end mill size and geometry should be optimized in accordance with the speed and feed at which the end mill operates in order to achieve the desired results.

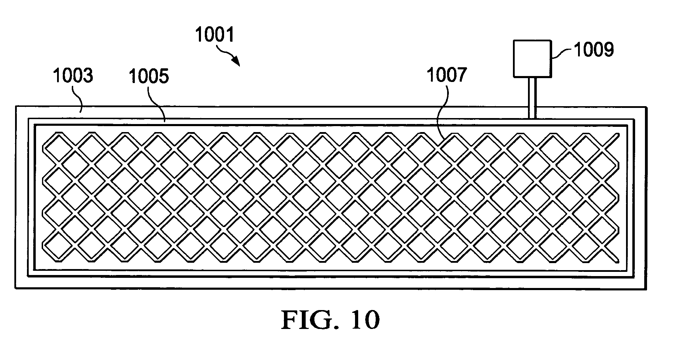

Step 905 includes preventing chatter, flutter, and harmonic coupling of the sheet metal during machining by using a vacuum fixture. Referring briefly to Figure 10, an exemplary vacuum fixture 1001 is illustrated. Vacuum fixture 1001 includes a base member 1003. Base member 1003 is preferably slightly larger than the sheet metal specimen, such as sheet 401, which the base member 1003 is configured to support. Base member 1003 can include an outer periphery seal 1005 that is operably associated with a vacuum pump 1009. Periphery seal 1005 can include a resilient seal member located in a recess. Base member 1003 further includes an inner grid 1007 of recessed seals. In the illustrative embodiment, inner grid 1007 includes a plurality of recessed seals located at 45 degree angles from normal, the seals being spaced apart approximately at 50mm (2 inch) intervals. Vacuum fixture 1001 is configured to first secure and seal sheet 401 to base member 1003 by drawing and maintaining a vacuum in periphery seal 1005. Once sheet 401 is secured to base member 1003 via periphery seal 1005, a vacuum is drawn and maintained through inner grid 1107 so as to secure the inner portions of sheet 401 to base member 1003. Both the periphery seal 1005 and inner grid 1007 are configured to secure and locate sheet 401 at the desired flat state during machining so as to prevent chatter, flutter, and harmonic coupling of the sheet metal during machining.

Step 907 can include machining using a climbing cutting pattern starting at an interior of the metal sheet 401. A climbing cut refers to the rotational direction of the end mill in relation to the direction of travel of the end mill. Starting the milling process at in the inner portion of the sheet metal further reduces the chance of chatter, flutter, and harmonic coupling of the sheet metal. Further, the end mill is preferably operated at an approximate 70% step-over (overlap), such that the area of each pass of the end mill includes 30% of previously machined area.

Step 909 includes using a halide free cutting fluid during machining. An exemplary cutting fluid is S761-B, marketed by Ecocool. However, it should be appreciated that other cutting fluids may be used.

Referring to Figures 5 and 6, an example machined article 501 is illustrated. The scaled sizes and locations of the features are machined into machined article 501 while sheet 401 is in the flat state. In the illustrated embodiment, a frame 503 having a uniform thickness T1 of approximately 1.8mm (.070 inches) is preserved in sheet 401. Further, tooling holes 505 are located in the frame 503. Frame 503 and tooling holes 505 are configured to facilitate brake forming and stretch forming in the forming step 305, as discussed further herein. One example feature that is machined in a scaled location is a profile feature 507 having an approximately thickness T3 of 1.5 mm (0.059 inches). Feature 507 includes a periphery and thickness profile that is machined in a scaled location and thickness so that the scaled features move and distort into the desired position in the forming step 305. The periphery of feature 507 is contoured in relation to a centerline of the part because of a built-in twist of abrasion strip member 113. Alternative embodiments of abrasion strip member 113 may have zero twist, such that feature 507 is approximately centered and symmetric on a lengthwise centerline. Machined article 501 further includes a thin portion having a thickness T2 of approximately 0.6mm (0.023 inches). The thin portion is machined down from the original sheet thickness to thickness T2. It should be appreciated that the ability to accurately machine features down to thicknesses of approximately 0.6mm (0.023 inches), as illustrated in the exemplary embodiment, is particularly valuable in aerospace applications, and especially where it is desirably to subsequently form the machined article into a complex contour by a brake forming and/or a stretch forming process.

Referring again to Figure 3, method 301 further includes a forming step 305. In the preferred embodiment, step 305 includes a brake forming step 313 and a subsequent stretch forming step 315. However, it should be appreciated that step 305 may include any forming procedure that achieves dimension dislocation and distortion of the machined features. Brake forming step 313 includes using a brake die, the leading edge of the brake die being properly aligned with the machined article 501 with use of tooling pins inserted into tooling holes 505. The brake forming in step 305 bends machined article 501 around a brake die so as to establish the radius of abrasion strip member 113.

Next, stretch forming step 315 is performed with precision to reproducibly distort the part. The stretch forming is performed in a controlled manner so as to control the strain-rate applied to the metal. Lubrication can be used to prevent any sudden slippage or jerking that might otherwise happen if the part were to bind with the stretch forming tool. Further, tooling pins may be located in tooling holes 505 to assure positive location of the part during stretch forming. Preferably, the jaws of the stretch forming tool are attached to the previously braked formed machine article 501 at the frame 503 that is intentionally produced in the machining step 303. Preferably, frame 503 has a constant thickness and sufficient width to provide grip on the entire jaw-plate of the stretch form grips or jaws. Strain rate is controlled and consistent during the stretch forming so as to prevent the part from distorting in an undesired manner. Further, the over-press part of the stretch forming tool can also be controlled to form the part.

As further noted herein, method 301 is particularly useful for manufacturing with a high performance metal alloy, such as a titanium alloy sheet. When using a titanium alloy sheet, it is preferable that step 315 includes stretch forming with a heated mandrel, as discussed further below. Cold forming (room temperature) titanium has severe limitations due to the lack of ductility of titanium. Traditional hot forming requires large and expensive presses that heat the entire environment, and further require an etching process after the hot forming process. However, the method of the present application includes the realization that the apparent ductility of titanium can be improved if the metal is slightly heated above room temperature and the strain rate is controlled at a low enough rate to match the imparted plasticity resulting from the slight elevation of temperature.

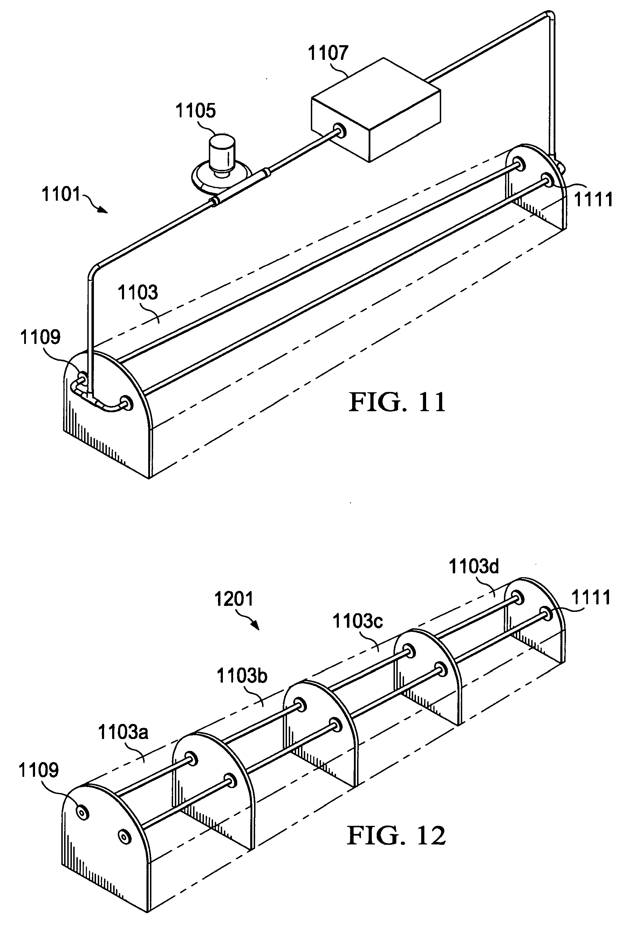

Referring now also to Figures 11 and 12, heated mandrels 1101 and 1201 are illustrated. Heated mandrel 1101 includes a solid portion 1103 having one or more fluid channels flowing from an inlet 1109 to an outlet 1101. A pump 1105 and a heat exchanger 1107 are configured to heat and circulate a hot working fluid, such as oil, through the solid portion 1103. Solid portion 1103 is preferably a steel or other heat conductive metal that is uniformly heated by the hot working fluid. The fluid channels in solid portion 1103 can be created by a drilling process, for example. Heated mandrel 1201 is similar in form and function to mandrel 1101, except heated mandrel 1201 is divided into sections 1103a-1103d for ease of manufacturing. Each section 1103a-1103d can be manufactured separately, then joined together to form a monolithic heated mandrel.

Heated mandrels 1101 and 1201 provide the ability to stretch form the metal sheet while minimizing strain at an atomic level, while erasing metal memory and partially stress relieving the metal sheet while it is being stretch formed. The metal sheet parts can be formed consistently with less risk of defect despite normal variations in material stock. The heating of the sheet metal by the heated mandrel minimizes the risk of non-uniform movement as the atoms more readily move (or dislocate) at elevated temperatures. The circulation of a working fluid in heated mandrel promotes temperature uniformity, not only in the mandrel, but also in the metal sheet part as it comes into contact with the heated mandrel. The precise temperature of the working fluid is implementation specific. However, according to the invention an oil is used as the working fluid, the oil being heated to approximately 177-204°C (350-400°F). .

During stretch forming, the metal sheet is gradually stretched using a controlled strain rate while the heated mandrel transfers heat to the surface of the metal sheet, thereby relaxing the material to stimulate movement of the metal during stretching, while also improving the uniformity of metal movement, reducing metal-memory, and at least partially stress-relieving the material by preventing stress build-up during the stretch forming process.

It should be appreciated that heated mandrels 1101 and 1201 may be used in stretch forming sheet metal of other material compositions, other than titanium.

Method 301 further includes a post processing step 307 for upgrading and trimming the part. For example, step 307 includes trimming off frame 503 and touching up any surface finish blemishes. Step 307 can also include a dye-penetrant check to confirm the absence of cracks and pits in the part.

Referring now also to Figure 7, abrasion strip member 113 is illustrated after frame 503 is trimmed off.

Referring now to Figure 8, a computer system 801 is schematically illustrated. System 801 is configured for performing one or more functions with regard to method 301, as well as other methods or processes described herein.

The system 801 can include an input/output (I/O) interface 803, an analysis engine 805, and a database 807. Alternative embodiments can combine or distribute the input/output (I/O) interface 803, analysis engine 805, and database 807, as desired. Embodiments of the system 801 can include one or more computers that include one or more processors and memories configured for performing tasks described herein. This can include, for example, a computer having a central processing unit (CPU) and non-volatile memory that stores software instructions for instructing the CPU to perform at least some of the tasks described herein. This can also include, for example, two or more computers that are in communication via a computer network, where one or more of the computers include a CPU and non-volatile memory, and one or more of the computer's non-volatile memory stores software instructions for instructing any of the CPU(s) to perform any of the tasks described herein. Thus, while the exemplary embodiment is described in terms of a discrete machine, it should be appreciated that this description is non-limiting, and that the present description applies equally to numerous other arrangements involving one or more machines performing tasks distributed in any way among the one or more machines. It should also be appreciated that such machines need not be dedicated to performing tasks described herein, but instead can be multi-purpose machines, for example computer workstations, that are suitable for also performing other tasks.

The I/O interface 803 provides a communication link between external users, systems, and data sources and components of the system 801. The I/O interface 803 can be configured for allowing one or more users to input information to the system 801 via any known input device. Examples can include a keyboard, mouse, touch screen, and/or any other desired input device. The I/O interface 803 can be configured for allowing one or more users to receive information output from the system 801 via any known output device. Examples can include a display monitor, a printer, and/or any other desired output device. The I/O interface 803 can be configured for allowing other systems to communicate with the system 801. For example, the I/O interface 803 can allow one or more remote computer(s) to access information, input information, and/or remotely instruct the system 801 to perform one or more of the tasks described herein. The I/O interface 803 can be configured for allowing communication with one or more remote data sources. For example, the I/O interface 803 can allow one or more remote data source(s) to access information, input information, and/or remotely instruct the system 801 to perform one or more of the tasks described herein.

The database 807 provides persistent data storage for system 801. While the term "database" is primarily used, a memory or other suitable data storage arrangement may provide the functionality of the database 807. In alternative embodiments, the database 807 can be integral to or separate from the system 801 and can operate on one or more computers. The database 807 preferably provides non-volatile data storage for any information suitable to support the operation of the system 801, including various types of data discussed further herein.

The analysis engine 805 can be configured for calculating and predicting the scaled location of machined features in step 311, programming the scaled machining operation in step 309, as well as other concepts disclosed herein. For example, the analysis engine 805 can be configured to analytically predict the dimension dislocation and distortion of the machined features during the forming procedures, thereby analytically calculating the scaled location of the features for machining. The analysis engine 805 can include various combinations of one or more processors, memories, and software components.

The system and method of the present application provide significant advantages, including: 1) creating the critical and complex surface features prior to brake forming and stretch forming; 2) calculating the scaled location of the machined features so that a subsequent forming step translates and deforms the machined features into the desired location; 3) providing a manufacturing method which does not require the chemical milling; 4) providing a method for machining high performance metal alloy, such as titanium; and 5) providing a heated mandrel for applying heat to a high performance metal alloy, such as titanium, during stretch forming.

It is apparent that a system and method having significant advantages has been described and illustrated. Although the system and method of the present application are shown in a limited number of forms, they are not limited to just these forms, but are amenable to various changes and modifications without departing from the spirit thereof.

The particular embodiments disclosed above are illustrative only, as the system and method may be modified and practiced in different but equivalent manners apparent to those skilled in the art having the benefit of the teachings herein. Modifications, additions, or omissions may be made to the system and method described herein without departing from the scope of the invention. The components of the system may be integrated or separated. Moreover, the operations of the system may be performed by more, fewer, or other components.

Furthermore, no limitations are intended to the details of construction or design herein shown, other than as described in the claims below. It is therefore evident that the particular embodiments disclosed above may be altered or modified and all such variations are considered within the scope of the claims below.

## Claims

1. A method of stretch forming (305) a metal sheet on a mandrel (1101;1201), the method comprising:
heating the mandrel (1101;1201) by circulating a working fluid through an interior portion of the mandrel (1101;1201);
heating the metal sheet (401) with the mandrel (1101;1201);
controlling a rate of which the metal sheet (401)is stretched about the mandrel (1101;1201),
wherein an oil is used as the working fluid is oil, the oil being heated to approximately 177-204°C (350-400 degrees Fahrenheit).

2. A method of machining a feature in a metal sheet (401), the method comprising:
securing the metal sheet (401) with a vacuum fixture (1001) to reduce vibrations during machining;
machining (303) at least one feature into the metal sheet (401) with an end mill starting at an interior of the metal sheet; and subsequently stretch forming (305) the metal sheet according to the method of claim 1.

3. The method according claim 2, wherein:
(i) the vacuum fixture (1001) has a periphery seal (1005) that is recessed into a base member (1003); or
(ii) the vacuum fixture has a plurality of recessed seals forming an inner grid (1007) in a base member (1003).

4. The method according to claim 2 or claim 3, further comprising:
calculating an optimal flute quantity (901) and flute geometry of the end mill, and optionally or preferably wherein the flute quantity is approximately five.

5. The method according to claim 2, or claim 3, or claim 4, further comprising:
calculating (903) an optimal feed and an optimal speed at which the end mill is to operate in the step of machining (303) the at least one feature into the metal sheet, and optionally or preferably wherein:
(i) the optimal feed is approximately 10-30 inches per minute (4-13 millimetres per second); or
(ii) the optimal speed is approximately 800-1000 revolutions per minute.

6. The method according to any of claims 2 to 5, wherein the step of machining (303) the at least one feature into the metal sheet (401) with the end mill starting at the interior of the metal sheet (401) includes operating the end mill in a climbing pattern (907).

7. The method according to any previous claim wherein the metal sheet (401) comprises a titanium alloy.

8. The method according to claim 1, wherein the step of controlling the rate of which the metal sheet (401) is stretched is configured to allow for heat transfer from the mandrel (1101;1201) to the metal sheet (401) as it is conformed to the mandrel (1101;1201).

9. The method according to any previous claim, wherein:
(i) the mandrel a solid piece mandrel (1101;1201); or
(ii) the mandrel (1101;1201) is a plurality of sections configured for assembly.

10. The method according to any previous claim, wherein the mandrel (1101;1201) is operably associated with a pump (1105) for circulating the working fluid.

11. The method according to any previous claim, wherein the step of controlling the rate of which the metal sheet (401) is stretched is configured to control the strain rate applied to the metal sheet (401).

12. The method according to any previous claim, wherein the steps of heating the metal sheet (401) and controlling the rate of which the metal sheet (401) is stretched are collectively configured to provide uniformity in metal movement of the metal sheet (401).

13. The method according to any previous claim, wherein the steps of heating the metal sheet (401) and controlling the rate of which the metal sheet (401) is stretched are collectively configured to prevent stress build-up.

## Patentansprüche

1. Verfahren zum Streckformen (305) eines Metallblechs auf einem Dorn (1101; 1201), wobei das Verfahren umfasst:
Erwärmen des Dorns (1101, 1201) durch Umwälzen eines Arbeitsfluids durch einen inneren Abschnitt des Dorns (1101, 1201);
Erwärmen des Metallblechs (401) mit dem Dorn (1101; 1201);
Steuern der Rate, mit der das Metallblech (401) um den Dorn (1101, 1201) gestreckt wird,
wobei ein Öl als Arbeitsfluid verwendet wird Öl ist, wobei das Öl auf etwa 177-204 °C (350-400 Grad Fahrenheit) erwärmt wird.

2. Verfahren zum Herausarbeiten eines Merkmals aus einem Metallblech (401), wobei das Verfahren umfasst:
Sichern des Metallblechs (401) mit einer Vakuumbefestigung (1001), um Vibrationen während der Bearbeitung zu verringern;
Herausarbeiten (303) mindestens eines Merkmals aus dem Metallblech (401) mit einem Schaftfräser beginnend an der Innenseite des Metallblechs; und anschließendes Streckformen (305) des Metallblechs nach dem Verfahren von Anspruch 1.

3. Verfahren nach Anspruch 2, wobei:
(i) die Vakuumbefestigung (1001) eine Randdichtung (1005) aufweist, die in ein Basiselement (1003) eingetieft ist; oder
(ii) die Vakuumbefestigung eine Mehrzahl von eingetieften Dichtungen aufweist, die ein Innengitter (1007) in einem Basiselement (1003) bilden.

4. Verfahren nach Anspruch 2 oder Anspruch 3, ferner umfassend:
Berechnen einer optimalen Nutenmenge (901) und Nutengeometrie der Schaftfräse und wobei optional oder vorzugsweise die Nutenmenge ungefähr fünf ist.

5. Verfahren nach Anspruch 2 oder Anspruch 3 oder Anspruch 4, ferner umfassend:
Berechnen (903) eines optimalen Vorschubs und einer optimalen Geschwindigkeit, mit denen die Schaftfräse im Schritt des Herausarbeitens (303) des mindestens eines Merkmals aus dem Metallblech arbeiten soll, und wobei optional oder vorzugsweise:
(i) der optimale Vorschub etwa 10-30 Inch pro Minute (4-13 Millimeter pro Sekunde) beträgt; oder
(ii) die optimale Geschwindigkeit 800-1000 Umdrehungen pro Minute beträgt.

6. Verfahren nach Anspruch 2 bis 5, wobei der Schritt des Herausarbeitens (303) des mindestens einen Merkmals aus dem Metallblech (401) mit der Schaftfräse beginnend an der Innenseite des Metallblechs (401) das Betreiben der Schaftfräse in einem ansteigenden Muster (907) beinhaltet.

7. Verfahren nach einem der vorangehenden Ansprüche, wobei das Metallblech (401) eine Titanlegierung beinhaltet.

8. Verfahren nach Anspruch 1, wobei der Schritt des Steuerns der Rate, mit der das Metallblech (401) gestreckt wird, so konfiguriert ist, dass eine Wärmeübertragung vom Dorn (1101; 1201) auf das Metallblech (401) möglich ist, während dieses an den Dorn (1101; 1201) angeschmiegt wird.

9. Verfahren nach einem der vorangehenden Ansprüche, wobei:
(i) der Dorn ein einstückiger Dorn (1101; 1201) ist; oder
(ii) der Dorn (1101; 1201) eine Mehrzahl von Abschnitten aufweist, die zum Zusammenbauen konfiguriert sind.

10. Verfahren nach einem der vorangehenden Ansprüche, wobei der Dorn (1101; 1201) betriebsmäßig mit einer Pumpe (1105) verbunden ist, um das Arbeitsfluid umzuwälzen.

11. Verfahren nach einem der vorangehenden Ansprüche, wobei der Schritt des Steuerns der Rate, mit der das Metallblech (401) gestreckt wird, dafür ausgelegt ist, die Dehnungsgeschwindigkeit zu steuern, die an das Metallblech (401) angelegt wird.

12. Verfahren nach einem der vorangehenden Ansprüche, wobei die Schritte des Erwärmens des Metallblechs (401) und des Steuerns der Rate, mit der das Metallblech (401) gestreckt wird, gemeinsam konfiguriert werden, um eine Gleichmäßigkeit der Metallbewegung des Metallblechs (401) zu ermöglichen.

13. Verfahren nach einem der vorangehenden Ansprüche, wobei die Schritte des Erwärmens des Metallblechs (401) und des Steuerns der Rate, mit der das Metallblech (401) gestreckt wird, gemeinsam konfiguriert werden, um den Aufbau von Spannungen zu verhindern.

## Revendications

1. Procédé de formage par étirage (305) d'une feuille de métal sur un mandrin (1101, 1201), le procédé comprenant :
le chauffage du mandrin (1101, 1201) en faisant circuler un fluide de travail à travers une partie intérieure du mandrin (1101, 1201) ;
le chauffage de la feuille de métal (401) avec le mandrin (1101, 1201) ;
le contrôle d'un taux d'étirement de la feuille de métal (401) autour du mandrin (1101, 1201),
dans lequel une huile utilisée comme fluide de travail est de l'huile, l'huile étant chauffé à environ 177-204 °C (350-400 degrés Fahrenheit).

2. Procédé d'usinage d'une caractéristique dans une feuille de métal (401), le procédé comprenant :
la fixation de la feuille de métal (401) avec un système de vide (1001) pour réduire les vibrations lors de l'usinage ;
l'usinage (303) au moins d'une particularité dans la feuille de métal (401) avec une fraise en bout à partir de l'intérieur de la feuille de métal ; et ensuite l'étirage du formage (305) de la feuille de métal selon le procédé de la revendication 1.

3. Procédé selon la revendication 2, dans lequel :
(i) le système de vide (1001) présente un joint d'étanchéité de périphérie (1005) qui est encastré dans un élément de base (1003) ; ou
(ii) le système de vide comprend une pluralité de joints d'étanchéité en creux formant une grille intérieure (1007) dans un élément de base (1003).

4. Procédé selon la revendication 2 ou revendication 3, comprenant en outre :
le calcul d'une quantité optimale de cannelure (901) et de la géométrie de cannelure de la fraise en bout, et éventuellement ou, de préférence dans lequel la quantité de la cannelure est d'environ cinq.

5. Procédé selon la revendication 2, ou la revendication 3, ou la revendication 4, comprenant en outre :
le calcul (903) d'un flux optimal et d'une vitesse optimale à laquelle la fraise en bout se trouve pour fonctionner dans l'étape d'usinage (303) la au moins une caractéristique dans la feuille de métal, et éventuellement ou, de préférence, dans lequel :
(i) l'alimentation optimale est d'environ 10 à 30 pouces par minute (4 à 13 millimètres par seconde), ou
(ii) la vitesse optimale est d'environ 800 à 1000 tours par minute.

6. Procédé selon l'une quelconque des revendications 2 à 5, dans lequel l'étape d'usinage (303) la au moins une caractéristique dans la feuille de métal (401) avec le fraise en bout à partir de l'intérieur de la feuille de métal (401) consiste à faire fonctionner la fraise en bout dans un circuit de montée (907).

7. Procédé selon l'une quelconque des revendications précédentes dans lequel la feuille de métal (401) comprend un alliage de titane.

8. Procédé selon la revendication 1, dans lequel l'étape consistant à commander le débit auquel la feuille de métal (401) est étirée est configurée pour permettre un transfert de chaleur à partir du mandrin (1101, 1201) sur la feuille de métal (401) tel qu'il est conformé au mandrin (1101, 1201).

9. Procédé selon l'une quelconque des revendications précédentes, dans lequel :
(i) le mandrin est un mandrin massif (1101, 1201), ou
(ii) le mandrin (1101, 1201) est une pluralité de sections configurées pour assemblage.

10. Procédé selon l'une quelconque des revendications précédentes, dans lequel le mandrin (1101, 1201) est associé de manière fonctionnelle avec une pompe (1105) pour faire circuler le fluide caloporteur.

11. Procédé selon l'une quelconque des revendications précédentes, dans lequel l'étape consistant à commander le débit auquel la feuille de métal (401) est étirée est configurée pour commander la vitesse de déformation appliquée à la feuille de métal (401).

12. Procédé selon l'une quelconque des revendications précédentes, dans lequel les étapes consistant à chauffer la feuille de métal (401) et à commander le débit auquel la feuille de métal (401) est étirée sont collectivement configurées pour fournir une uniformité dans le mouvement de métal de la feuille métallique (401).

13. Procédé selon l'une quelconque des revendications précédentes, dans lequel les étapes consistant à chauffer la feuille de métal (401) et à commander le débit auquel la feuille de métal (401) est étirée sont collectivement configurées pour empêcher l'accumulation de contrainte.
